# EUROPÄISCHE PATENTSCHRIFT

(11) **EP 2 733 017 B1**
(45) Veröffentlichungstag und Bekanntmachung des Hinweises auf die Patenterteilung: **13.01.2016**
(21) Anmeldenummer: 13191547.2
(22) Anmeldetag: 05.11.2013
(51) Int. Cl.: B60P 7/08

(54) **Verfahren zur Sicherung eines Containers in einem Transportfahrzeug sowie zugehöriges Ladungssicherungssystem**
Method for securing a container in a transport vehicle and corresponding load securing system
Procédé de sécurisation d'un conteneur dans un véhicule de transport et système de sécurisation de charge associé

(30) Priorität: 14.11.2012 DE 102012220737
(43) Veröffentlichungstag der Anmeldung: 21.05.2014
(73) Patentinhaber: Zentis Logistik Service GmbH, 52070 Aachen (DE)
(72) Erfinder: Biermeier, Andreas, 52159 Roetgen (DE); Heinrichs, Josef, 52222 Stolberg (DE)
(74) Vertreter: Bauer, Dirk

(56) Entgegenhaltungen:
- EP-A1- 2 368 759
- DE-U1-202007 006 147

## Beschreibung

Die Erfindung betrifft ein Verfahren zur Sicherung eines Containers in einem Transportfahrzeug, das eine Ladefläche und mindestens eine parallel zu einer Längsachse des Transportfahrzeugs verlaufende Seitenwand aufweist, an der ladeflächennah eine parallel zu der Ladefläche verlaufende Befestigungsschiene zur Anbringung von Zugmitteln angeordnet ist, wobei der Container ein Oberteil und ein mindestens ein Bein aufweisendes gestellartiges Unterteil besitzt, mit den folgenden Verfahrensschritten:
a) Der Container wird angrenzend an die Seitenwand auf der Ladefläche abgestellt.
b) Der Container wird mittels mindestens eines mit der Befestigungsschiene unmittelbar oder mittelbar verbundenen Zugmittels in Richtung auf die Ladefläche gezurrt.
c) Ein erstes Ende des Zugmittels wird mit der Befestigungsschiene verbunden und das Zugmittel in einer solchen Weise um das Oberteil des Containers herumgeführt und mit einem zweiten Ende ebenfalls mit der Befestigungsschiene oder an einer Ankopplungsstelle mit dem Oberteil des Containers verbunden und gespannt, dass - in einer vertikalen Ebene senkrecht zu der Seitenwand betrachtet - eine Komponente einer von dem Zugmittel übertragenen Haltekraft in Richtung auf die Seitenwand zu verläuft.

Unter "angrenzend abgestellt" ist hier zu verstehen, dass der Container "so nah wie möglich" an der Seitenwand des Transportfahrzeugs platziert werden sollte. Eine Positionierung in der Art, dass sich ein am nächsten zu der Seitenwand befindliches Teil des Containers maximal 10 cm bis 15 cm von der Seitenwand entfernt befindet, soll gleichwohl auch als "angrenzend" verstanden werden.

Die Unterscheidung einer mittelbaren und unmittelbaren Verbindung zwischen dem Zugmittel und der Befestigungsschiene zielt auf die Abdeckung unterschiedlicher Konstruktionen ab. Somit ist es für die vorliegende Erfindung nicht relevant, ob das Zugmittel direkt, ohne Zwischenschaltung eines weiteren Verbindungsbauteils ("unmittelbar"), oder indirekt, unter Verwendung eines Verbindungsbauteils ("mittelbar") an die Befestigungsschiene angeschlossen ist.

Unter "Verzurren" ist hier verstehen, dass das Zugmittel derart gespannt ist, dass es eine Kraft auf den Container ausübt, der hierdurch fixiert wird. Eine Verzurrung mittels eines schlaffen Zugmittels ist demzufolge nicht möglich.

Die Erfindung offenbart ferner ein Ladungssicherungssystem zur Sicherung eines Containers mit einem einen Hohlraum umschließenden Oberteil und einem mindestens einem Bein aufweisenden gestellartigen Unterteil, mit
a) einer in eine Seitenwand, die in Längsrichtung eines Transportfahrzeugs verläuft, integrierten Befestigungsschiene, die parallel zu und in der Nähe einer Ladefläche des Transportfahrzeugs verläuft, die mit der Seitenwand einen rechten Winkel einschließt und
b) einem Zugmittel das mit der Befestigungsschiene mittelbar oder unmittelbar verbindbar und mit dem der Container verzurrbar ist, wobei das Zugmittel mit einem ersten Ende mit der Befestigungsschiene verbunden, um das Oberteil des Containers herum geführt und mit einem zweiten Ende ebenfalls mit der Befestigungsschiene oder an einer Ankopplungsstelle mit dem Oberteil des Containers verbunden ist, so dass - in einer vertikalen Ebene, senkrecht zu der Seitenwand betrachtet - eine Komponente einer von dem Zugmittel übertragenen Kraft in eine Richtung auf die Seitenwand zu verläuft.

### Stand der Technik

Ein Verfahren sowie ein Ladungssicherungssystem der eingangs beschriebenen Art sind insbesondere aus der EP 2 368 759 bekannt. Diese zeigt ein Ladungssicherungssystem, mittels dessen es möglich ist, einen dort beschriebenen Container sicher auf der Ladefläche eines Transportfahrzeuges - typischerweise eines Lastkraftwagens - zu fixieren, wobei das gezeigte System den besonderen Vorteil hat, dass eine Befestigung des Containers an ausschließlich einer Seitenwand der Ladefläche des Transportfahrzeuges notwendig ist (siehe Figuren 1, 2 und 19 der EP 2 368 759). Dies ist deshalb besonders vorteilhaft, da es selbst bei einer voll beladenen Ladefläche ohne Weiteres möglich ist, das Transportfahrzeug vollständig zu begehen. Das heißt, dass die Ladefläche nicht durch eine Verzurrung eines Containers an beiden Seitenwänden der Ladefläche blockiert ist, wobei die jeweiligen Zugmittel, mittels derer der jeweilige Container gesichert ist, sich über eine gesamte Breite der Ladefläche erstrecken. Die Befestigung des Containers an lediglich einer Seitenwand ist daher besonders vorteilhaft. Jeder einzelne Container ist also immer nur in Richtung einer Seitenwand des Transportfahrzeugs gezurrt, wobei an beiden Seitenwänden jeweils eine Reihe von Containern angeordnet sein kann und dennoch ein mittiger Durchgang frei bleibt.

Zur Erhöhung der Standsicherheit der Container wurde gemäß dem Stand der Technik bislang neben den beschriebenen Zugmitteln vorteilhafterweise ferner ein weiteres Sicherungsmittel vorgesehen, welches das mindestens eine Bein des Containers in Nähe zum Boden der Ladefläche hält (siehe beispielsweise Figuren 5 bis 9 der EP 2 368 759). Ein solches zusätzliches Sicherungsmittel kann insbesondere zur Sicherung beladener Container von besonderem Vorteil sein, da die auf einen beladenen Container wirkenden Massenträgheitskräfte - beispielsweise im Zuge einer Bremsung des Transportfahrzeuges - beträchtliche Werte annehmen können, so dass allein ein normales, typischerweise bandartiges Zugmittel, das den Container niederzurrt, womöglich nicht ausreichen könnte, um die auf den Container wirkenden Horizontallasten in Längsrichtung des Transportfahrzeugs aufzunehmen beziehungsweise durch Reibung der Beine des Containers an den Boden der Ladefläche zu übertragen. Gemäß dem Stand der Technik ist es ebenso möglich, das auf das Bein des Containers wirkende Zugmittel ausschließlich, das heißt als Alternative zu dem bandartigen, um das Oberteil des Containers herum geführten Zugmittel, zu verwenden.

Als nachteilig bei der Verwendung mehrerer Sicherungsmittel ist anzusehen, dass unterschiedliche Arten von Sicherungsmitteln bereitgestellt werden müssen, wobei die einzelnen Sicherungselemente, die beispielsweise gemäß der EP 2 368 759 zum Einsatz kommen, verhältnismäßig komplexe Bauteile darstellen.

In der DE 20 2007 006 147 U1 ist eine Zugmittelanordnung zur Sicherung von Ladegut offenbart, die zur Sicherung stehend nebeneinander angeordneter Behältnisse verwendet wird. Hierzu werden an gegenüberliegenden Seitenwänden des Transportfahrzeugs bandartige Zugmittel an der jeweiligen Seitenwand verankert und ein Mal um die Gesamtheit der zu sichernden Container herum geführt. Die Zugmittelanordnung macht also von dem Gedankten Gebrauch, Lagerkräfte nur an einem Umfang der Gesamtheit aller Container aufzunehmen und im Übrigen zwischen den Containern abzutragen. Die von einer Seitenwand des Transportfahrzeugs ausgehenden Zugmittel werden dabei um die Container herum geführt und schließlich wieder an derselben Seitenwand befestigt, von der sie ursprünglich ausgegangen waren. Eine solche Verzurrung kommt ausgehend von beiden sich gegenüberliegenden Seitenwänden zum Einsatz. Ein freier Gang auf der Ladefläche des Transportfahrzeugs bleibt nicht erhalten.

### Aufgabe

Der vorliegenden Erfindung liegt die Aufgabe zugrunde, ein Verfahren zur Sicherung eines Containers sowie ein zugehöriges Sicherungssystem hervorzubringen, mittels dessen ein Container unter Einsatz möglichst weniger unterschiedlicher Komponenten sicher auf der Ladefläche eines Transportfahrzeugs fixiert werden kann, wobei eine Durchgangsfläche auf der Ladefläche des Transportfahrzeugs vorteilhafterweise frei bleiben sollte.

### Lösung

Die zugrunde liegende Aufgabe wird ausgehend von einem Verfahren der eingangs beschriebenen Art erfindungsgemäß durch den folgenden Verfahrensschritt gelöst:
d) Bevor der Container mittels des mindestens einen Zugmittels in Richtung auf die Ladefläche gezurrt wird, wird das Zugmittel mit mindestens einem Bein des Containers in Kontakt gebracht und unter Ausbildung eines Umschlingungswinkels von mindestens 60° um das Bein herumgeführt.

Das bedeutet, dass allein durch den Einsatz des Zugmittels, welches gemäß dem Stand der Technik um das Oberteil des Containers herum geführt beziehungsweise mittels eines Adapterelements mit dem Container verbunden und mittels dessen der Container in Richtung auf die Ladefläche sowie in Richtung auf die Seitenwand gezurrt wird, nun erfindungsgemäß gleichzeitig auch die Fixierung mindestens eines Beins des Containers mit übernommen wird. Dieser Verfahrensschritt ermöglicht es im Unterschied zum Stand der Technik, dass nur noch lediglich eine Art von Sicherungselement - nämlich nur noch das Zugmittel - vorgehalten werden muss, um den Container angemessen sichern zu können, ohne dass dadurch die Standsicherheit des Containers im Vergleich zum Stand der Technik negativ beeinflusst wird. Hinzu kommt, dass das Zugmittel im Vergleich zu den nach dem Stand der Technik verwendeten Sicherungselementen ein vergleichsweise unkompliziertes und kostengünstig verfügbares Bauteil ist.

Der "Umschlingungswinkel" im Sinne der vorliegenden Anmeldung beschreibt in einem Horizontalschnitt durch das Bein des Containers betrachtet denjenigen Winkel, entlang dessen das Zugmittel an einer äußeren Mantelfläche eines Beins anliegt, wobei definitionsgemäß eine "erste" und eine "letzte" Kontaktstelle zwischen dem Zugmittel und dem jeweiligen Bein maßgebend sind. Das bedeutet, dass bei einem Bein mit kreisförmigem Querschnitt der Umschlingungswinkel gemessen um einem Mittelpunkt des Querschnitts des Beins sich von einer Stelle, an der das Zugmittel mit der Mantelfläche des Beins erstmalig in Kontakt kommt, bis zu einer Stelle erstreckt, an der das Zugmittel letztmalig mit der Mantelfläche des Beins in Kontakt ist. Wenngleich dies nicht notwendigerweise der Fall sein muss, ist das Zugmittel zwischen diesen beiden Stellen typischerweise durchgehend mit dem Bein beziehungsweise dessen Mantelfläche in Kontakt. Dies gilt insbesondere für Beine mit einem runden, insbesondere kreisförmigen Querschnitt. Bei einem quadratischen Querschnitt des Beins ist dies hingegen nicht der Fall, wobei dennoch auch hier der Umschlingungswinkel durch die Betrachtung der "ersten" und "letzten" Kontaktstelle zwischen Zugmittel und Bein definiert ist.

Ein möglichst großer Umschlingungswinkel ist von Vorteil, da das Zugmittel dann potentiell besser geeignet ist, die Bewegungsfreiheit des Beins des Containers einzuschränken. Mit anderen Worten ist das Bein desto besser in horizontale Richtung betrachtet auf der Ladefläche fixiert, umso mehr es von dem Zugmittel "eingefasst" und folglich mittels des Zugmittels blockiert ist, sich frei zu bewegen. Entsprechend wird es als vorteilhaft angesehen, wenn das Zugmittel mit einem Umschlingungswinkel von mindestens 90°, vorzugsweise mindestens 135°, weiter vorzugsweise mindestens 180°, um ein Bein des Containers herumgeführt wird. In einer besonders vorteilhaften Ausführung bildet das Zugmittel dabei eine "Schlaufe" um mindestens ein Bein des Containers, wobei bei der Ausbildung einer Schlaufe ein Umschlingungswinkel von größer 225° vorliegt.

Die "Schlaufe" gemäß dieser Ausgestaltung des Verfahrens ist dabei so um das mindestens eine Bein herum geführt, dass eine Bewegung des Beins des Containers in eine Richtung, die von einer Befestigungsstelle des Zugmittels an der Befestigungsschiene weg führt, unterbunden ist. Das bedeutet, dass das mindestens eine Bein - würde es sich beispielsweise während eines Bremsmanövers infolge von Massenträgheitskräften in eine von der Befestigungsstelle abgewandte Richtung bewegen - mit dem um das Bein herum geführten Zugmittel eingreifen und dieses gegebenenfalls "straffen" würde, bis sich durch die Spannung des Zugmittels in selbigem eine Zugkraft aufgebaut hat, die die auf das Bein beziehungsweise den Container wirkende Massenträgheitskraft kontert und folglich das Bein an dessen jeweiligem Standort hält. Anpresskräfte in Richtung vertikal auf den Boden der Ladefläche, die ferner mittels des Zugmittels auf den Container übertragen werden, sind hierbei unterstützend tätig, indem sie gleichermaßen die Haft- als auch die Gleitreibung zwischen dem Boden der Ladefläche und einer Unterseite des mindestens einen Beins des Containers erhöhen und somit horizontalen Bewegungen desselben entgegenwirken.

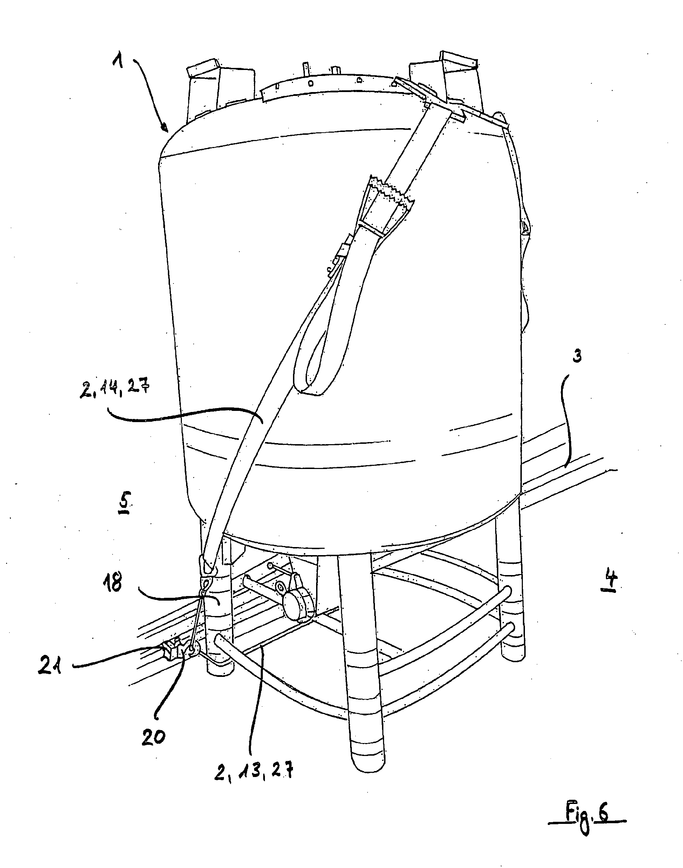

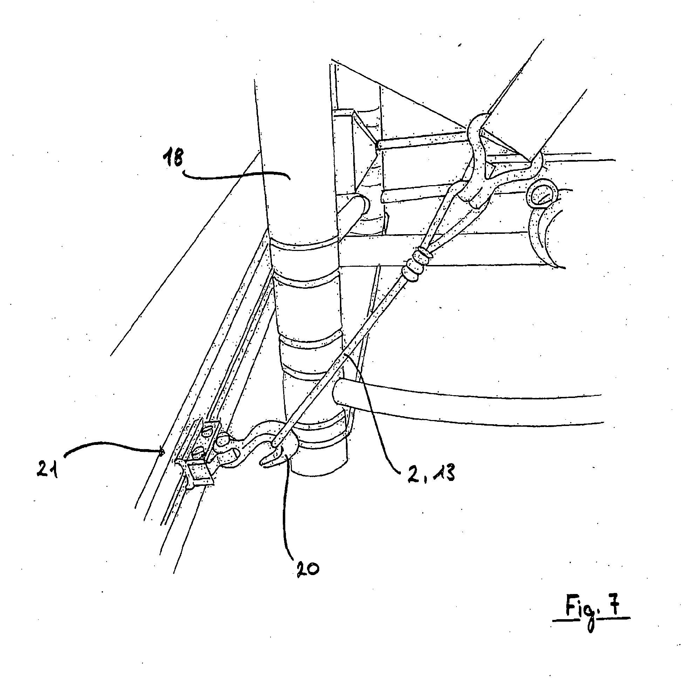

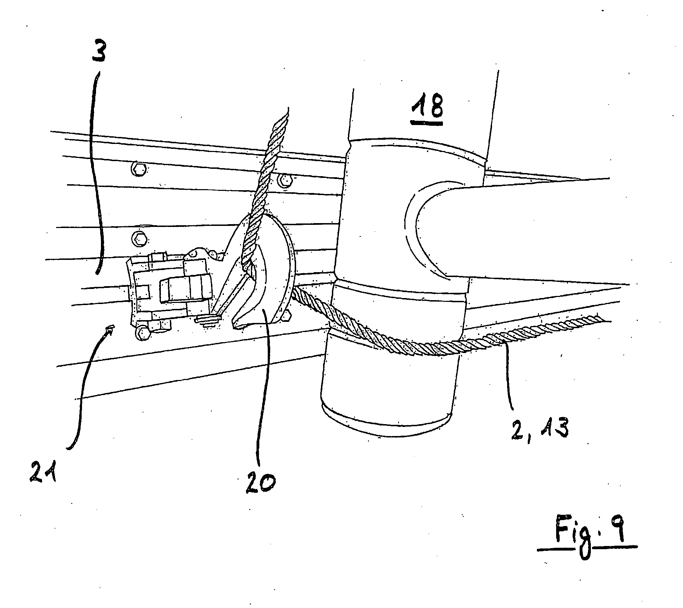

Das Zugmittel kann gleichermaßen um genau ein Bein oder um mehrere Beine, insbesondere genau zwei Beine, des Containers geführt werden. Letztere Variante ist insbesondere bei einem Container besonders von Vorteil, dessen Untergestell insgesamt vier Beine aufweist, die gemeinsam die Ecken einer rechteckigen Fläche bilden. Bei der Aufstellung solcher Container angrenzend an die Seitenwand des Transportfahrzeugs grenzen vorzugsweise zwei der vier Beine an die Seitenwand an. Diese können sodann besonders einfach mittels des Zugmittels umschlungen und somit gesichert werden. Beispielhaft wird hier auf die Figuren 6 bis 9 des nachstehenden Ausführungsbeispiels verwiesen.

Besonders vorteilhaft ist es, wenn das Zugmittel ladeflächennah in einer Schlaufe um ein Bein geführt wird. Auf diese Weise ist es besonders einfach, die Schlaufe in direkter Nähe zur Befestigungsstelle des Zugmittels an der Befestigungsschiene anzuordnen. Unter "ladeflächennah" ist hier ein senkrecht zur Ladefläche gemessener Abstand von maximal 50 cm, vorzugsweise maximal 30 cm, zu verstehen. Aus statischer Sicht könnte es ebenso vorteilhaft sein, wenn das Zugmittel in einer solchen Höhe gemessen von dem Boden der Ladefläche um das Bein des Containers geführt wird, die senkrecht zum Boden der Ladefläche betrachtet möglichst nah zum Schwerpunkt des Containers um das Bein gelegen ist. Auf diese Weise können sich einstellende Drehmomente im Fall der Einwirkung von Kräften auf den Container besonders effektiv unterdrückt werden, da die im Schwerpunkt des Containers wirkenden Kräfte auf diese Weise nur einen minimalen Hebelarm relativ zur Schlaufe aufweisen.

Das Verfahren ist weiterhin dann besonders von Vorteil, wenn das Zugmittel - ausgehend von einem mit der Befestigungsschiene verbundenen Ende - nach der um das Bein herumführenden Schlaufe zu einem ebenfalls mit der Befestigungsschiene verbundenen Befestigungselement geführt wird, wobei das Zugmittel vorzugsweise in Form einer weiteren Schlaufe um das Befestigungselement geführt wird, wobei weiter vorzugsweise ein Umschlingungswinkel des Zugmittels im Bereich des Befestigungselements zwischen 60° und 120°, vorzugsweise zwischen 70° und 110° beträgt. Diese Art der Führung des Zugmittels in der Reihenfolge "Befestigungsschiene - Bein(e) des Containers - Befestigungsschiene - Oberteil des Containers" ist für den Lastabtrag, der über das Zugmittel erfolgt, besonders gut geeignet. Dies liegt darin begründet, dass die Rückführung des Zugmittels von dem Bein zu einem Befestigungselement an der Befestigungsschiene dem Zugmittel ein zusätzliches Auflager verschafft, in das Kräfte des Zugmittels abgeleitet werden können.

Außerdem ist es mittels eines solchen zusätzlichen Befestigungsmittels besonders einfach, das Zugmittel zu führen und auf diese Weise beispielsweise einen besonders hohen Umschlingungswinkel um das Bein des Containers einzustellen. Vorzugsweise ist das Befestigungsmittel in der Nähe eines Ausgangspunktes des Zugmittels an der Befestigungsschiene angeordnet, so dass das Zugmittel nach dem Umschlingen des Beins quasi wieder zurück zu diesem Ausgangspunkt geführt werden muss, wodurch sich automatisch ein hoher Umschlingungswinkel zwischen dem Zugmittel und dem Bein des Containers ergibt. Weiter vorzugsweise sind das eine an der Befestigungsschiene befestigte Ende des Zugmittels sowie das Befestigungselement gemeinsam an einem Ankerelement befestigt, dass mit der Befestigungsschiene verbunden ist, beziehungsweise das Befestigungselement an der Befestigungsschiene "verankert".

Weiter vorteilhaft ist das Verfahren, wenn das Zugmittel in einen ersten Abschnitt und einen zweiten Abschnitt unterteilt ist, wobei der erste Abschnitt von der Befestigungsschiene zu einem Adapterelement und der zweite Abschnitt ebenfalls von der Befestigungsschiene zu dem Adapterelement geführt wird, wobei das Adapterelement, vorzugsweise formschlüssig, mit einem Kopplungselement des Containers in Eingriff gebracht wird. Das Kopplungselement kann beispielsweise aus einem "Höcker" gebildet sein, der fest mit dem Container verbunden, beispielsweise verschweißt ist, wobei das Adapterelement in Form einer Platte ausgebildet sein kann, die einen mittigen Durchbruch aufweist, so dass das Adapterelement durch ein "Überstülpen" über das höckerförmige Kopplungselement formschlüssig mit dem Container verbunden werden kann. Die beiden Abschnitte des Zugmittels sind vorteilhafterweise jeweils von einer Seite des Containers her mit der Befestigungsschiene verbunden.

Die beschriebene Zweiteiligkeit des Zugmittels führt dazu, dass ein Kraftzustand an einer Stelle des Zugmittels nicht automatisch den Kraftzustand an jeder anderen Stelle beeinflusst. Das heißt, dass im Falle eines unter hoher Zugspannung stehenden ersten Abschnitts des Zugmittels der zweite Abschnitt des Zugmittels ohne Weiteres einen völlig unterschiedlichen Spannungszustand aufweisen kann. Ferner bietet die Zweiteiligkeit den Vorteil, dass ein Versagen eines Abschnitts des Zugmittels beispielsweise in einer Unfallssituation nicht direkt zu einem Versagen des gesamten Zugmittels führen muss und eine gewisse Sicherung des Containers in einem solchen Fall weiterhin durch den jeweils unbeschädigten Abschnitt des Zugmittels gewährleistet ist.

In vorrichtungstechnischer Sicht wird die zugrunde liegende Aufgabe erfindungsgemäß dadurch gelöst, dass das Zugmittel mit mindestens einem Bein des Containers in Kontakt ist und unter Ausbildung eines Umschlingungswinkels von mindestens 60° um das Bein herumgeführt ist. Mittels dieses Ladungssicherungssystems ist das erfindungsgemäße Verfahren besonders einfach umsetzbar. Dabei ist es gemäß obiger Erläuterung von Vorteil, wenn der Umschlingungswinkel mindestens 90°, vorzugsweise mindestens 135°, weiter vorzugsweise mindestens 150° beträgt.

Ferner kann es vorteilhaft sein, wenn das Zugmittel in Form einer Schlaufe um ein Bein des Containers geführt ist. Mittels einer solchen Schlaufe ist das erfindungsgemäße Verfahren besonders einfach umsetzbar.

Alternativ kann es ebenso besonders vorteilhaft sein, wenn das Zugmittel mit mindestens, vorzugsweise genau, zwei Beinen des Containers in Kontakt ist und vorzugsweise unter Ausbildung eines Umschlingungswinkels von mindestens 60° mit jedem der Beine um die Beine herumgeführt ist. Die Vorzüge einer solchen Ladungssicherung - beispielsweise in Verbindung mit einem vierbeinigen Container - sind vorstehend bereits erläutert.

Das Sicherungssystem ist dann besonders vorteilhaft, wenn es ein Befestigungselement aufweist, das vorteilhafterweise in Form eines Hakenelements ausgeführt ist. Mittels eines solchen Befestigungselements ist das Zugmittel besonders einfach ausgehend von der Befestigungsschiene zu dem Bein des Containers und wieder zurück führbar, so dass der vorstehend beschriebene Umschlingungswinkel möglichst groß ausfällt. Ausgehend von dem Befestigungselement wird das Zugmittel dann vorteilhafterweise - wie nach dem Stand der Technik bekannt - um das Oberteil des Containers herumgeführt.

Vorteilhafterweise ist das Befestigungselement an einem Ankerelement angeordnet, das vorzugsweise einen Schlittenkörper aufweist, der in der Befestigungsschiene in der Längsrichtung des Transportfahrzeugs verschiebbar ist. Auf diese Weise kann das Befestigungselement stets an einen jeweiligen Aufstellort des zu fixierenden Containers auf der Ladefläche bewegt werden. Eine Vorausplanung hinsichtlich fester Aufstellorte auf der Ladefläche ist nicht notwendig. Ferner erhält das Ladungssicherungssystem durch die Verschiebbarkeit des beziehungsweise der Befestigungselemente eine Flexibilität hinsichtlich unterschiedlicher Containergrößen und -maße.

Das vorstehend beschriebene Verfahren, bei dem das Befestigungselement möglichst in der Nähe zur Befestigungsstelle des Zugmittels an der Befestigungsschiene angeordnet ist, lässt sich aus vorrichtungstechnischer Sicht besonders effizient lösen, indem das Ankerelement einen Bolzen aufweist, der in eine an einem Ende des Zugmittels angeordnete Öse eingreift und an dem vorzugsweise das Befestigungselement, vorzugsweise in um eine Längsachse des Bolzens schwenkbarer Weise, befestigt ist. Diese Anordnung ermöglicht ein besonders einfaches Zusammenspiel von dem Ankerelement und dem Zugmittel, da das Zugmittel direkt durch den Formschluss des Bolzens mit der Öse des Endes des Zugmittels an dem Ankerelement und folglich an der Befestigungsschiene befestigt wird. Ferner ist bei dieser Anordnung das Befestigungselement in direkter Nähe zur Befestigungsstelle des Zugmittels an der Befestigungsschiene angeordnet, wie es gemäß obiger Erläuterung besonders vorteilhaft ist.

Das Ladungssicherungssystem ist ferner dann besonders vorteilhaft, wenn das Befestigungselement oberhalb der Öse angeordnet ist, wobei vorzugsweise die Öse zwischen zwei Schenkeln eines U-förmigen Ankerelement und/oder das Befestigungselement ein U-förmiges Anschlussende aufweist, in das ein oberer Schenkel des U-förmigen Ankerelements eingreift. Bei dieser Anordnung ist das Zugmittel in besonders vorteilhafter Weise erst um das Bein und anschließend um das Oberteil des Containers führbar, wie aus dem nachfolgenden Ausführungsbeispiel deutlich wird.

### Ausführungsbeispiele

Das vorstehend beschrieben erfindungsgemäße Verfahren sowie das zugehörige Ladungssicherungssystem sind nachfolgend anhand zweier Ausführungsbeispiele, die in den Figuren gezeigt sind, beschrieben.

Es zeigt:
- Fig. 1:: Einen ersten Container, der mittels eines ersten erfindungsgemäßen Ladungssicherungssystems auf einer Ladefläche eines Transportfahrzeugs gesichert ist,
- Fig. 2:: wie Figur 1, jedoch von einer anderen Seite des Containers her,
- Fig. 3:: Ein Detail eines Beins des ersten Containers, das mittels eines Zugmittels gemäß dem erfindungsgemäßen Verfahren gesichert wird,
- Fig. 4:: Ein Detail einer Zugmittelführung im Zusammenspiel mit einem Befestigungselement gemäß dem erfindungsgemäßen Verfahren in einer Draufsicht,
- Fig. 5:: wie Figur 4, jedoch in einer Seitenansicht,
- Fig. 6:: Einen zweiten Container, der mittels eines zweiten erfindungsgemäßen Ladungssicherungssystems auf einer Ladefläche eines Transportfahrzeugs gesichert ist,
- Fig. 7:: Ein Detail einer Zugmittelführung um ein erstes Bein des zweiten Containers,
- Fig. 8:: wie Figur 7, jedoch um ein zweites Bein des zweiten Containers und
- Fig. 9:: Ein Detail des ersten Beins des zweiten Containers, das mittels eines Zugmittels gemäß dem erfindungsgemäßen Verfahren gesichert wird.

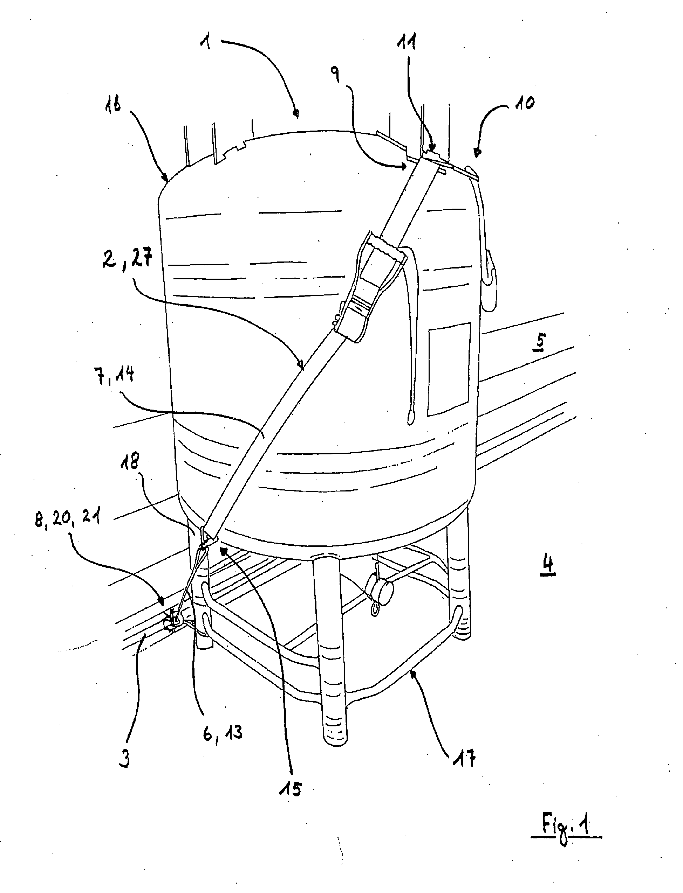

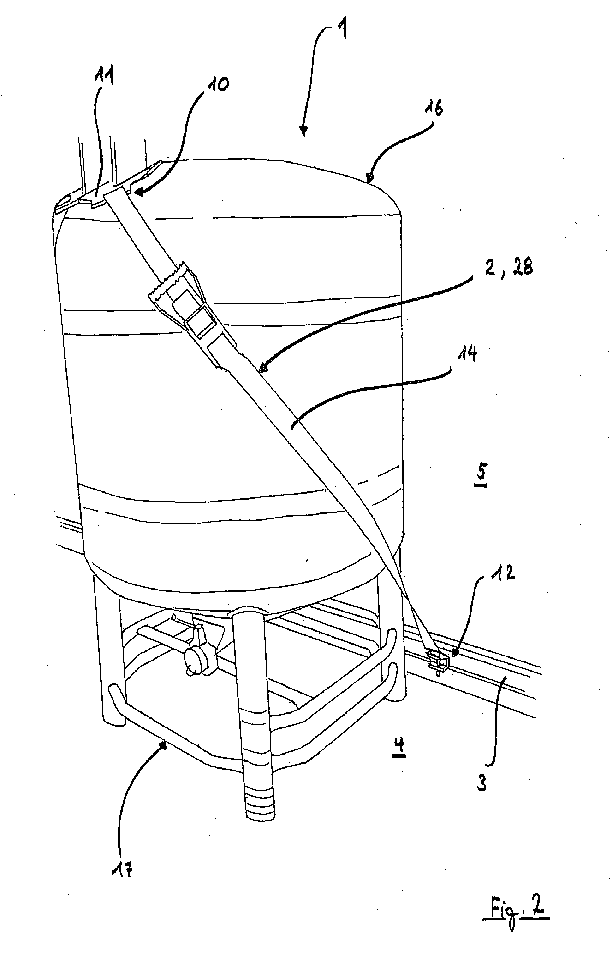

Das Ausführungsbeispiel, das in den Figuren 1 bis 5 gezeigt ist, umfasst einen Container **1,** der mittels eines Zugmittels **2** an einer Befestigungsschiene **3** festgezurrt ist, wobei die Befestigungsschiene **3** nahe einer Ladefläche **4** (hier ist eine Mittellinie der Befestigungsschiene **3** in einer Höhe von 10 cm über der Ladefläche **4** angeordnet) eines nicht näher dargestellten Transportfahrzeuges angeordnet ist. Die Befestigungsschiene **3** verläuft in Längsrichtung der Ladefläche **4** und ist an einer Seitenwand **5** des Transportfahrzeuges angeordnet.

Das Zugmittel **2** umfasst im gezeigten Beispiel zwei Abschnitte **27, 28,** wobei der erste Abschnitt **27** von einer Befestigungsstelle **8** an der Befestigungsschiene **3** bis zu einer Ankopplungsstelle **9** an einem Adapterelement **11** und der zweite Abschnitt **28** von einer weiteren Ankopplungsstelle **10** des Adapterelements **11** zu einer weiteren Befestigungsstelle **12** an der Befestigungsschiene **3** geführt sind. Das Adapterelement **11** ist hier aus einem Plattenelement gebildet, das einen mittigen rechteckigen Durchbruch aufweist. Mittels dieses Durchbruchs ist das Adapterelement **11** über ein Kopplungselement **29** "gestülpt", der in Form eines Höckers ausgebildet ist und fest mit dem Oberteil **16** des Containers **1** verschweißt ist. Das Adapterelement **11** und das Kopplungselement **29** bilden gemeinsam einen Formschluss aus.

Abschnitt **27** des Zugmittels **2** umfasst einen Teil **6,** der von einem Stahlseil **13** gebildet ist, sowie einen Teil **7,** der von einem handelsüblichen Spanngurt **14** gebildet ist. Beide Teile **6, 7,** Stahlseil **13** und Spanngurt **14,** sind mittels eines aus einem Haken und einer Öse gebildeten Formschlusses an einer Verbindungsstelle **15** miteinander verbunden.

Der Container **1** besteht aus einem Oberteil **16** und einem Unterteil **17,** wobei letzteres vier Beine **18** umfasst. Der Container **1** ist bewusst nah an der Seitenwand **5** positioniert, damit in der Mitte der Ladefläche **4** des Transportfahrzeuges ein Durchgang frei bleibt.

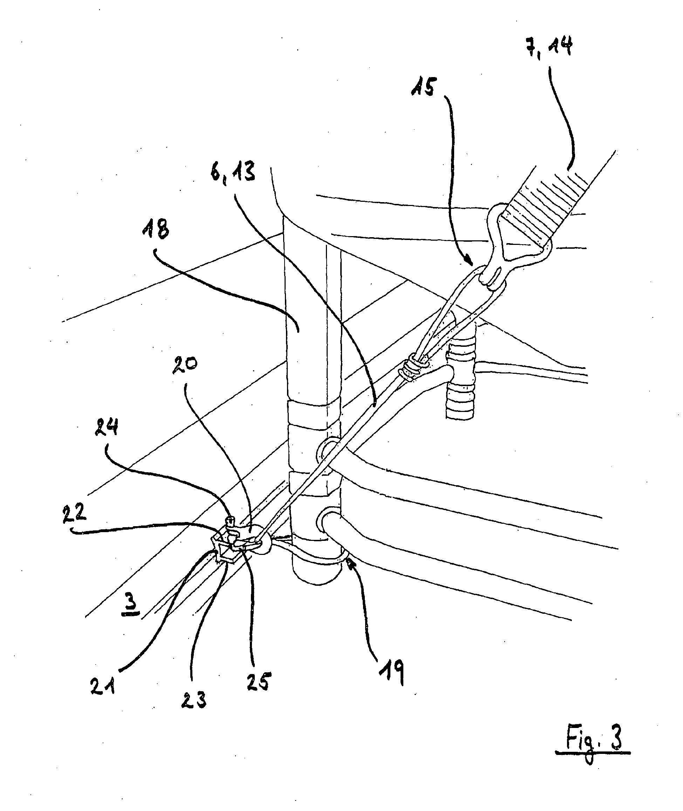

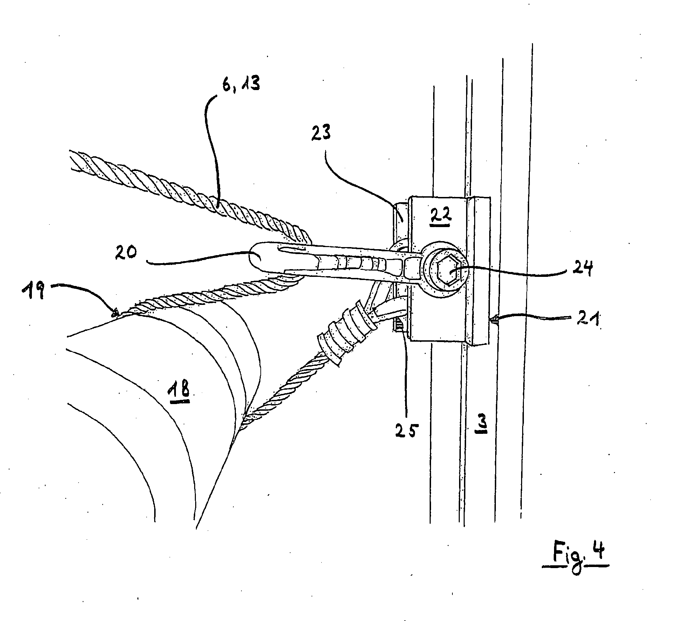

Eines der Beine **18** ist mittels des Teils **6** des Zugmittels **2** eingefasst, das von dem Stahlseil **13** gebildet ist. Insbesondere aus den Figuren 3 bis 5 ergibt sich besonders einfach die Art der Führung des Stahlseils **13** um das Bein **18.** Somit ist das Stahlseil **13** ausgehend von der Befestigungsschiene **3** in Form einer Schlaufe **19** um das Bein **18** herum und anschließend zu einem Befestigungselement **20** in Form eines Hakenelements zurück geführt. Das Befestigungselement **20** ist wiederum an der Befestigungsschiene **3** angeordnet. Das heißt, dass das Zugmittel **2** im Bereich des Beins **18** fast vollständig um selbiges herum geführt ist, so dass sich ein Umschlingungswinkel von ca. 270° ergibt. An dem Befestigungselement **20** ist das Zugmittel **2** abermals umgelenkt, wobei es mit dem Befestigungselement **20** einen Umschlingungswinkel von ca. 100° ausbildet (siehe Figur 4).

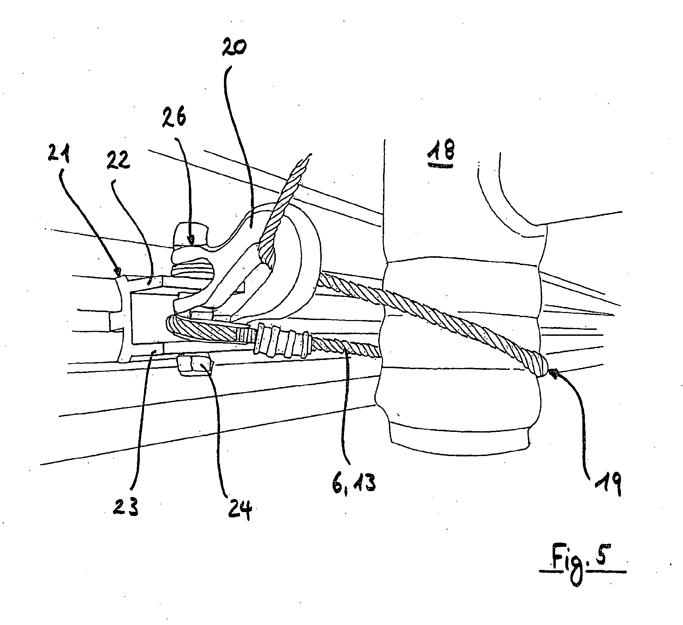

Sowohl die Befestigungsstelle **8** des Zugmittels **2** an der Befestigungsschiene **3** als auch Befestigungselement **20** sind gemeinsam an einem Ankerelement **21** angeordnet, das verschiebbar entlang der Befestigungsschiene **3** an selbiger angeordnet ist. Das Ankerelement **21** ist besonders gut in Figur 5 erkennbar. Es weist einen U-förmigen Querschnitt auf, der seitlich geöffnet ist, so dass zwei Schenkel **22, 23** des Ankerelements **21** horizontal orientiert übereinander angeordnet sind. Durch beide Schenkel **22, 23** ist ein vertikal orientierter Bolzen **24** geführt, der formschlüssig in Durchbrüche der Schenkel **22, 23** eingreift. Ein Ende des Stahlseils **13** ist in Form einer Öse **25** ausgeformt, die den Bolzen **24** umschließt und auf diese Weise ebenfalls einen Formschluss mit dem Bolzen **24** ausbildet. Auf diese Weise können Zugkräfte, die auf das Zugmittel **2** wirken, über den Bolzen **24** in das Ankerelement **21** und schließlich in die Befestigungsschiene **3** abgeleitet werden. An dem oberen Schenkel **22** des Ankerelements **21** ist ferner das Befestigungselement **20** in Form des Hakenelements angeordnet. Dieses weist gleichfalls an einem Anschlussende **26** einen U-förmigen Querschnitt auf, mittels dessen es den Schenkel **22** einfasst. Das Anschlussende **26** ist ebenfalls mit dem Bolzen **24** unter Ausbildung eines Formschlusses verbunden und relativ zu dem Ankerelement **21** um eine Längsachse des Bolzens **24** verschwenkbar. Die gezeigte Art der Anordnung ist besonders Platz sparend und ermöglicht eine besonders einfache Verbindung des Zugmittels **2** mit der Befestigungsschiene **3.**

In den Figuren 6 bis 9 ist eine alternative Führung des Zugmittels **2** gezeigt, die gleichermaßen dazu geeignet ist, den Container **1** auf der Ladefläche **4** des Transportfahrzeuges zu fixieren. Der Hauptunterschied zwischen den Führungen des Zugmittels **2** gemäß der Figuren 1 bis 5 und der Figuren 6 bis 9 besteht darin, dass wahlweise ein oder mehrere Beine **18, 30** des Containers **1** umschlungen werden, um den Container **1** zu fixieren. In diesem Fall sind genau zwei Beine **18, 30** des Containers 1 mit dem Zugmittel **2** in Kontakt.

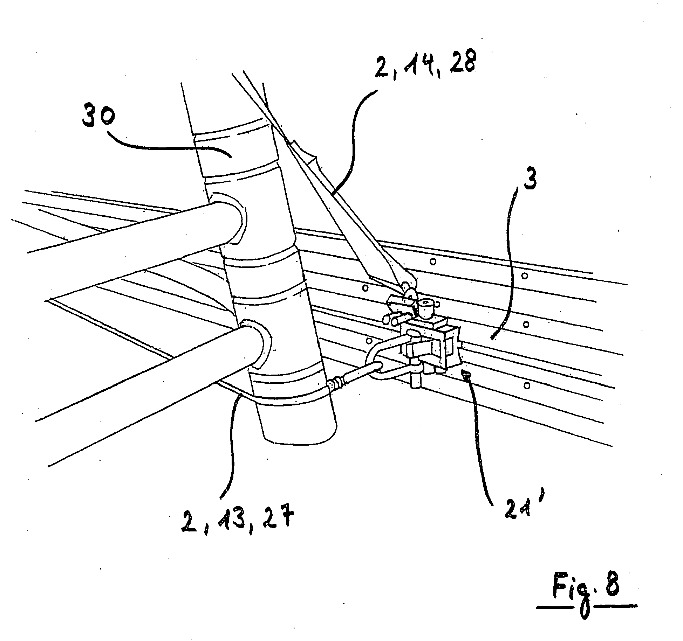

Insbesondere aus Figur 6 wird deutlich, dass bei der zweiten Variante der Zugmittelführung das Stahlseil **13** des Abschnitts **27** des Zugmittels **2** um das Bein **18** des Containers **1** herum geführt ist und dabei mit dem Bein **18** einen Umschlingungswinkel von etwa 80° ausbildet. Das Zugmittel **2** geht im Unterschied zu dem in den Figuren 1 bis 5 gezeigten Beispiel nicht von dem Ankerelement **21** aus, das direkt neben dem Bein **18** des Containers **1** angeordnet ist. Stattdessen ist das Zugmittel **2** an einem anderen Ankerelement **21'** auf einer anderen Seite des Containers **1** befestigt, wie aus Figur 8 deutlich wird. Von da aus ist das Zugmittel **2** um ein weiteres Bein **30** des Containers **1** geführt, wobei es mit ebendiesem Bein **30** einen Umschlingungswinkel von etwa 90° ausbildet. Von dem Bein **30** verläuft das Zugmittel **2** zu dem Bein **18,** umschlingt dieses wie vorstehend erläutert und läuft von dort zu dem Befestigungselement **20** in Form eines Hakenelement. Letzteres ist mittels des Ankerelements **21** an der Befestigungsschiene **3** verschieblich befestigt. Im Übrigen ist die Führung des Zugmittels identisch zu derjenigen gemäß den Figuren 1 bis 5.

Die Zugmittelführung gemäß den Figuren 6 bis 9 kann insofern vorteilhaft sein, als beide Beine **18, 30** des Containers, die in unmittelbarer Nähe zur Seitenwand **5** des Transportfahrzeuges angeordnet sind, darin gehindert werden, sich in eine Richtung senkrecht zur Seitenwand **5** zu bewegen, während bei der Variante gemäß den Figuren 1 bis 5 zumindest eine minimale Verdrehung des Containers **1** um das Bein **18** nahe des Ankerelements **21** denkbar wäre.

### Bezugszeichenliste

- 1: Container
- 2: Zugmittel
- 3: Befestigungsschiene
- 4: Ladefläche
- 5: Seitenwand
- 6: Teil
- 7: Teil
- 8: Befestigungsstelle
- 9: Ankopplungsstelle
- 10: Ankopplungsstelle
- 11: Adapterelement
- 12: Befestigungsstelle
- 13: Stahlseil
- 14: Spanngurt
- 15: Verbindungsstelle
- 16: Oberteil
- 17: Unterteil
- 18: Bein
- 19: Schlaufe
- 20: Befestigungselement
- 21: Ankerelement
- 22: Schenkel
- 23: Schenkel
- 24: Bolzen
- 25: Öse
- 26: Anschlussende
- 27: Abschnitt
- 28: Abschnitt
- 29: Kopplungselement
- 30: Bein

## Patentansprüche

1. Verfahren zur Sicherung eines Containers (1) in einem Transportfahrzeug, das eine Ladefläche (4) und mindestens eine parallel zu einer Längsachse des Transportfahrzeugs verlaufende Seitenwand (5) aufweist, an der ladeflächennah eine parallel zu der Ladefläche (4) verlaufende Befestigungsschiene (3) zur Anbringung von Zugmitteln (2) angeordnet ist, wobei der Container (1) ein Oberteil (16) und ein mindestens ein Bein (18) aufweisendes gestellartiges Unterteil (17) besitzt, mit den folgenden Verfahrensschritten:
a) Der Container (1) wird angrenzend an die Seitenwand (5) auf der Ladefläche (4) abgestellt;
b) Der Container (1) wird mittels mindestens eines mit der Befestigungsschiene (3) unmittelbar oder mittelbar verbundenen Zugmittels (2) in Richtung auf die Ladefläche (4) gezurrt;
c) Ein erstes Ende des Zugmittels (2) wird mit der Befestigungsschiene (3) verbunden und das Zugmittel (2) so um das Oberteil (16) des Containers (1) herumgeführt und mit einem zweiten Ende ebenfalls mit der Befestigungsschiene (3) oder an einer Ankopplungsstelle (9) mit dem Oberteil (16) des Containers (1) verbunden und gespannt, dass, in einer vertikalen Ebene senkrecht zu der Seitenwand (5) betrachtet, eine Komponente einer von dem Zugmittel (2) übertragenen Haltekraft in Richtung auf die Seitenwand (5) zu verläuft,
**gekennzeichnet durch** den folgenden Verfahrensschritt:
d) Bevor der Container (1) mittels des mindestens einen Zugmittels in Richtung auf die Ladefläche (4) gezurrt wird, wird das Zugmittel (2) mit mindestens einem Bein (18) des Containers (1) in Kontakt gebracht und unter Ausbildung eines Umschlingungswinkels von mindestens 60° um das Bein (18) herumgeführt.

2. Verfahren nach Anspruch 1, **dadurch gekennzeichnet, dass** das Zugmittel (2) mit einem Umschlingungswinkel von mindestens 90°, vorzugsweise mindestens 135°, weiter vorzugsweise mindestens 180°, um ein Bein (18) des Containers (1) herumgeführt wird.

3. Verfahren nach Anspruch 1 oder 2, **dadurch gekennzeichnet, dass** das Zugmittel (2) in einer Schlaufe (19) um genau ein Bein (18) des Containers (1) herumgeführt wird.

4. Verfahren nach Anspruch 1 oder 2, **dadurch gekennzeichnet, dass** das Zugmittel (2) mit mindestens, vorzugsweise genau, zwei Beinen (18, 30) in Kontakt gebracht wird, wobei das Zugmittel (2) vorzugsweise mit jedem der betreffenden Beine (18, 30) einen Umschlingungswinkel von mindestens 60° aufweist.

5. Verfahren nach einem der Ansprüche 1 bis 4, **dadurch gekennzeichnet, dass** das Zugmittel (2) ladeflächennah um mindestens ein Bein (18, 30) geführt wird.

6. Verfahren nach einem der Ansprüche 1 bis 5, **dadurch gekennzeichnet, dass** das Zugmittel (2) - ausgehend von einem mit der Befestigungsschiene (3) verbundenen Ende - nach der um ein Bein (18) herumführenden Schlaufe (19) zu einem ebenfalls mit der Befestigungsschiene (3) verbundenen Befestigungselement (20) geführt wird, wobei das Zugmittel (2) vorzugsweise in Form einer weiteren Schlaufe um das Befestigungselement (20) geführt wird, wobei weiter vorzugsweise ein Umschlingungswinkel des Zugmittels (2) im Bereich des Befestigungselements (20) zwischen 60° und 120°, vorzugsweise zwischen 70° und 110° beträgt.

7. Verfahren nach einem der Ansprüche 1 bis 6, **dadurch gekennzeichnet, dass** das Zugmittel (2) in einen ersten Abschnitt (27) und einen zweiten Abschnitt (28) unterteilt ist, wobei der erste Abschnitt (27) von der Befestigungsschiene (3) zu einem Adapterelement (11) und der zweite Abschnitt (28) ebenfalls von der Befestigungsschiene (3) zu dem Adapterelement (11) geführt wird, wobei das Adapterelement (11) mit einem Kopplungselement (29) des Containers (1), vorzugsweise formschlüssig, in Eingriff gebracht wird.

8. Ladungssicherungssystem zur Sicherung eines Containers (1) mit einem einen Hohlraum umschließenden Oberteil (16) und einem mindestens einem Bein (18) aufweisenden gestellartigen Unterteil (17), mit
a) einer in eine Seitenwand (5), die in Längsrichtung eines Transportfahrzeugs verläuft, integrierten Befestigungsschiene (3), die parallel zu und in der Nähe einer Ladefläche (4) des Transportfahrzeugs verläuft, die mit der Seitenwand (5) einen rechten Winkel einschließt und
b) einem Zugmittel (2) das mit der Befestigungsschiene (3) mittelbar oder unmittelbar verbindbar und mit dem der Container (1) verzurrbar ist, wobei das Zugmittel (2) mit einem ersten Ende mit der Befestigungsschiene (3) verbunden, um das Oberteil (16) des Containers (1) herum geführt und mit einem zweiten Ende ebenfalls mit der Befestigungsschiene (3) oder an einer Ankopplungsstelle (9) mit dem Oberteil (16) des Containers (1) verbunden ist, so dass - in einer vertikalen Ebene, senkrecht zu der Seitenwand (5) betrachtet - eine Komponente einer von dem Zugmittel (2) übertragenen Kraft in eine Richtung auf die Seitenwand (5) zu verläuft,
**dadurch gekennzeichnet, dass**
c) das Zugmittel (2) mit mindestens einem Bein (18) des Containers (1) in Kontakt ist und unter Ausbildung eines Umschlingungswinkels von mindestens 60° um das Bein (18) herumgeführt ist.

9. Ladungssicherungssystem nach Anspruch 8, **dadurch gekennzeichnet, dass** der Umschlingungswinkel mindestens 90°, vorzugsweise mindestens 135°, weiter vorzugsweise mindestens 150° beträgt.

10. Ladungssicherungssystem nach Anspruch 8 oder 9, **dadurch gekennzeichnet, dass** das Zugmittel (2) mit mindestens, vorzugsweise genau, zwei Beinen (18, 30) des Containers (1) in Kontakt ist und vorzugsweise unter Ausbildung eines Umschlingungswinkels von mindestens 60° mit jedem der betreffenden Beine (18, 30) um die Beine (18, 30) herumgeführt ist.

11. Ladungssicherungssystem nach einem der Ansprüche 8 bis 10, **gekennzeichnet durch** eine Schlaufe (19), mit der das Zugmittel (2) um mindestens ein Bein (18, 30) des Containers (1) geführt ist.

12. Ladungssicherungssystem nach einem der Ansprüche 8 bis 11, **gekennzeichnet durch** ein Ankerelement (21), das ein Befestigungselement (20), vorzugsweise in Form eines Hakenelements, aufweist, wobei das Zugmittel (2) in einer Schlaufe um das Befestigungselement (20) geführt ist, wobei das Ankerelement (21) vorzugsweise an der Befestigungsschiene (3) angeordnet ist.

13. Ladungssicherungssystem nach einem der Ansprüche 8 bis 12, **dadurch gekennzeichnet, dass** das Ankerelement (21) einen Schlittenkörper aufweist, der in der Befestigungsschiene (3) in der Längsrichtung des Transportfahrzeugs verschiebbar ist.

14. Ladungssicherungssystem nach einem der Ansprüche 8 bis 13, **dadurch gekennzeichnet, dass** das Ankerelement (21) einen Bolzen (24) aufweist, der in eine an einem Ende des Zugmittels (2) angeordnete Öse (25) eingreift und an dem vorzugsweise das Befestigungselement (20), vorzugsweise in um eine Längsachse des Bolzens (24) schwenkbarer Weise, befestigt ist.

15. Ladungssicherungssystem nach einem der Ansprüche 8 bis 14, **dadurch gekennzeichnet, dass** das Befestigungselement (20) oberhalb der Öse (25) angeordnet ist, wobei vorzugsweise die Öse (25) zwischen zwei Schenkeln (22, 23) eines U-förmigen Ankerelements (21) und/oder das Befestigungselement (20) ein U-förmiges Anschlussende (26) aufweist, in das ein oberer Schenkel (22) des U-förmigen Ankerelements (21) eingreift.

## Claims

1. A method for securing a container (1) in a transport vehicle, which exhibits a loading platform (4) and at least one lateral wall (5) running parallel to a longitudinal axis of the transport vehicle, on which a fastening rail (3) running parallel to the loading platform (4) for attaching traction mechanisms (2) is situated near the loading platform, wherein the container (1) has an upper part (16) and a rack-like lower part (17) exhibiting at least one leg (18), with the following procedural steps:
a) the container (1) is placed adjacent to the lateral wall (5) on the loading platform (4);
b) the container (1) is lashed by means of at least one traction mechanism (2) connected directly or indirectly with the fastening rail (3) in the direction toward the loading platform (4);
c) a first end of the traction mechanism (2) is connected with the fastening rail (3), and the traction mechanism (2) is guided around the upper part (16) of the container (1) and a second end is also connected and tensioned with the fastening rail (3) or at a coupling location (9) with the upper part (16) of the container (1) in such a way that, as viewed in a vertical plane perpendicular to the lateral wall (5), a component of a retaining force transmitted by the traction mechanism (2) runs in the direction toward the lateral wall (5),
**characterized by** the following procedural step:
d) Before the container (1) is lashed by means of the at least one traction mechanism in the direction toward the loading platform (4), the traction mechanism (2) is brought into contact with at least one leg (18) of the container (1), and guided around the leg (18) with the formation of a wrap angle of at least 60°.

2. The method according to claim 1, **characterized in that** the traction mechanism (2) is guided around a leg (18) of the container (1) with a wrap angle of at least 90°, preferably of at least 135°, further preferably of at least 180°.

3. The method according to claim 1 or 2, **characterized in that** the traction mechanism (2) is guided around precisely one leg (18) of the container (1) in a loop (19).

4. The method according to claim 1 or 2, **characterized in that** the traction mechanism (2) is brought into contact with at least two, preferably precisely two, legs (18, 30), wherein the traction mechanism (2) preferably exhibits a wrap angle of at least 60° with each of the respective legs (18, 30).

5. The method according to one of claims 1 to 4, **characterized in that** the traction mechanism (2) is guided around at least one leg (18, 30) in proximity to the loading platform.

6. The method according to one of claims 1 to 5, **characterized in that** the traction mechanism (2), proceeding from one end joined with the fastening rail (3), after the loop (19) leading around one leg (18), is guided to a fastening element (20) that is also joined with the fastening rail (3), wherein the traction mechanism (2) is preferably guided around the fastening element (20) in the form of an additional loop, wherein a wrap angle of the traction mechanism (2) in the area of the fastening element (20) further preferably measures between 60° and 120°, preferably between 70° and 110°.

7. The method according to one of claims 1 to 6, **characterized in that** the traction mechanism (2) is divided into a first section (27) and a second section (28), wherein the first section (27) is guided from the fastening rail (3) to an adapter element (11), and the second section (28) is also guided from the fastening rail (3) to the adapter element (11), wherein the adapter element (11) is engaged, preferably positively, with a coupling element (29) of the container (1).

8. A load securing system for securing a container (1) with an upper part (16) enveloping a hollow space, and a rack-like lower part (17) exhibiting at least one leg (18), with
a) a fastening rail (3) that is integrated in a lateral wall (5) running in the longitudinal direction of a transport vehicle, and runs parallel and in proximity to a loading platform (4) of the transport vehicle, which includes a right angle with the lateral wall (5), and
b) a traction mechanism (2) that can be indirectly or directly connected with the fastening rail (3) and lashed with the container (1), wherein a first end of the traction means (2) is connected with the fastening rail (3) and guided around the upper part (16) of the container (1), and a second end is also connected with the fastening rail (3) or at a coupling location (9) with the upper part (16) of the container (1), so that, as viewed in a vertical plane perpendicular to the lateral wall (5), a component of a force transmitted by the traction mechanism (2) runs in the direction toward the lateral wall (5), **characterized in that**
c) the traction mechanism (2) is in contact with at least one leg (18) of the container (1), and guided around the leg (18) with the formation of a wrap angle of at least 60°.

9. The load securing system according to claim 8, **characterized in that** the wrap angle measures at least 90°, preferably at least 135°, further preferably at least 150°.

10. The load securing system according to claim 8 or 9, **characterized in that** the traction mechanism (2) is in contact with at least, preferably exactly, two legs (18, 30) of the container (1), and preferably guided around the legs (18, 30) with the formation of a wrap angle of at least 60° with each of the respective legs (18, 30).

11. The load securing system according to one of claims 8 to 10, **characterized by** a loop (19), with which the traction mechanism (2) is guided around at least one leg (18, 30) of the container (1).

12. The load securing system according to one of claims 8 to 11, **characterized by** an anchor element (21), which exhibits a fastening element (20), preferably in the form of a hook element, wherein the traction means (2) is guided in a loop around the fastening element (20), wherein the anchor element (21) is preferably arranged on the fastening rail (3).

13. The load securing system according to one of claims 8 to 12, **characterized in that** the anchor element (21) exhibits a carriage body that can be moved in the longitudinal direction of the transport vehicle in the fastening rail (3).

14. The load securing system according to one of claims 8 to 13, **characterized in that** the anchor element (21) exhibits a bolt (24), which engages into an eyelet (25) arranged at one end of the traction mechanism (2), and to which the fastening element (20) is preferably fastened, preferably in such a way that it can pivot around a longitudinal axis of the bolt (24).

15. The load securing system according to one of claims 8 to 14, **characterized in that** the fastening element (20) is arranged above the eyelet (25), wherein the eyelet (25) between two arms (22, 23) of a U-shaped anchor element (21) and/or the fastening element (20) exhibits a U-shaped connecting end (26), into which an upper arm (22) of the U-shaped anchor element (21) engages.

## Revendications

1. Procédé de fixation d'un conteneur (1) dans un véhicule de transport qui présente une surface de chargement (4) et au moins une paroi latérale (5) parallèle à l'axe longitudinal du véhicule de transport sur lequel, proche de la surface de chargement, est placé un rail de fixation (3) parallèle à la surface de chargement (4) pour attacher des moyens de traction (2), sachant que le conteneur (1) possède une partie supérieure (16) et une partie inférieure (17) de type châssis présentant au moins un pied (18), comprenant les étapes de procédé suivantes :
a) le conteneur (1) est déposé sur la surface de chargement (4), attenant à la paroi latérale (5) ;
b) le conteneur (1) est amarré en direction de la surface de chargement (4) au moyen d'au moins un moyen de traction (2) relié directement ou indirectement au rail de fixation (3) ;
c) une première extrémité du moyen de traction (2) est reliée au rail de fixation (3) et le moyen de traction (2) est ainsi dirigé autour de la partie supérieure (16) du conteneur (1) et relié et serré également par une seconde extrémité au rail de fixation (3) ou sur un point de couplage (9) avec la partie supérieure (16) du conteneur (1) que, vu dans un plan vertical à la paroi latérale (5), une composante d'une force de retenue transmise par le moyen de traction (2) passe en direction de la paroi latérale (5),
**caractérisé par** les étapes de procédé suivantes :
d) avant que le conteneur (1) ne soit amarré en direction de la surface de chargement (4) au moyen de l'au moins un moyen de traction, le moyen de traction (2) est mis en contact avec au moins un pied (18) du conteneur (1) et dirigé autour du pied (18) en formant un angle d'enlacement d'au moins 60°.

2. Procédé selon la revendication 1, **caractérisé en ce que** le moyen de traction (2) est dirigé autour d'un pied (18) du conteneur (1) avec un angle d'enlacement d'au moins 90°, de préférence d'au moins 135°, plus encore de préférence d'au moins 180°.

3. Procédé selon la revendication 1 ou 2, **caractérisé en ce que** le moyen de traction (2) est dirigé précisément autour d'un pied (18) du conteneur (1) dans une boucle (19).

4. Procédé selon la revendication 1 ou 2, **caractérisé en ce que** le moyen de traction (2) est mis en contact avec au moins, de préférence précisément, deux pieds (18, 30), sachant que le moyen de traction (2) présente de préférence un angle d'enlacement d'au moins 60° avec chacun des pieds concernés (18, 30).

5. Procédé selon l'une des revendications 1 à 4, **caractérisé en ce que** le moyen de traction (2) est dirigé autour d'au moins un pied (18, 30) à proximité de la surface de chargement.

6. Procédé selon l'une des revendications 1 à 5, **caractérisé en ce que** le moyen de traction (2) - partant d'une extrémité reliée au rail de fixation (3)
- est dirigé après la boucle (19) dirigeant autour d'un pied (18) vers un élément de fixation (20) relié également au rail de fixation (3), sachant que le moyen de traction (2) est dirigé de préférence sous forme d'une boucle supplémentaire autour de l'élément de fixation (20), sachant que de manière plus préférée, un angle d'enlacement du moyen de traction (2) au niveau de l'élément de fixation (20) fait entre 60° et 120°, de préférence entre 70° et 110°.

7. Procédé selon l'une des revendications 1 à 6, **caractérisé en ce que** le moyen de traction (2) est divisé en un premier tronçon (27) et un second tronçon (28), sachant que le premier tronçon (27) est dirigé du rail de fixation (3) vers un élément adaptateur (11) et le second élément (28) est également dirigé du rail de fixation (3) vers l'élément adaptateur (11), sachant que l'élément adaptateur est mis en prise de préférence par complémentarité de forme avec un élément de couplage (29) du conteneur (1).

8. Système de fixation de chargement pour fixer un conteneur (1) comprenant une partie supérieure (16) entourant un espace creux et une partie inférieure (17) de type châssis présentant au moins un pied (18) comprenant
a) un rail de fixation (3) intégré dans une paroi latérale (5), qui passe dans le sens longitudinal d'un véhicule de transport, qui est parallèle à et passe à proximité d'une surface de chargement (4) du véhicule de transport, qui inclut un angle droit avec la paroi latérale (5) et
b) un moyen de traction (2) qui peut être relié directement ou indirectement au rail de fixation (3) et avec lequel le conteneur (1) peut être amarré, sachant que le moyen de traction (2) est relié au rail de fixation (3) par une première extrémité, est dirigé autour de la partie supérieure (16) du conteneur (1) et relié également par une seconde extrémité au rail de fixation (3) ou sur un point de couplage (9) avec la partie supérieure (16) du conteneur (1), de telle sorte que, vu dans un plan vertical à la paroi latérale (5), une composante d'une force transmise par le moyen de traction (2) passe dans une direction vers la paroi latérale (5),
**caractérisé en ce que**
c) le moyen de traction (2) est mis en contact avec au moins un pied (18) du conteneur (1) et est dirigé autour du pied (18) en formant un angle d'enlacement d'au moins 60°.

9. Système de fixation de chargement selon la revendication 8, **caractérisé en ce que** l'angle d'enlacement fait au moins 90°, de préférence au moins 135°, plus encore de préférence au moins 150°.

10. Système de fixation de chargement selon la revendication 8 ou 9, **caractérisé en ce que** le moyen de traction (2) est en contact avec au moins, de préférence précisément, deux pieds (18, 30) du conteneur (1) et est de préférence dirigé autour des pieds (18, 30) en formant un angle d'enlacement d'au moins 60° avec chacun des pieds concernés (18, 30).

11. Système de fixation de chargement selon au moins l'une des revendications 8 à 10, **caractérisé par** une boucle (19) avec laquelle le moyen de traction (2) est dirigé autour d'au moins un pied (18, 30) du conteneur (1).

12. Système de fixation de chargement selon au moins l'une des revendications 8 à 11, **caractérisé par** un élément d'ancrage (21) qui présente un élément de fixation (20), de préférence sous forme d'un élément de crochet, sachant que le moyen de traction (2) est dirigé autour de l'élément de fixation (20) dans une boucle, sachant que l'élément d'ancrage (21) est placé de préférence sur le rail de fixation (3).

13. Système de fixation de chargement selon au moins l'une des revendications 8 à 12, **caractérisé en ce que** l'élément d'ancrage (21) présente un corps de patins qui est mobile dans le rail de fixation (3) dans le sens longitudinal du véhicule de transport.

14. Système de fixation de chargement selon au moins l'une des revendications 8 à 13, **caractérisé en ce que** l'élément d'ancrage (21) présente une cheville (24) qui s'engage dans un oeillet (25) placé sur une extrémité du moyen de traction (2) et sur lequel est fixé de préférence l'élément de fixation (20), de préférence de manière pivotante sur un axe longitudinal de la cheville (24).

15. Système de fixation de chargement selon au moins l'une des revendications 8 à 14, **caractérisé en ce que** l'élément de fixation (20) est placé au-dessus de l'oeillet (25), sachant que de préférence, sillet (25), entre deux branches (22, 23) d'un élément d'ancrage (21) en U et/ou l'élément de fixation (20), présente une extrémité de raccordement en U (26) dans laquelle s'engage une branche supérieure (22) de l'élément d'ancrage en forme de U (21).
